# EUROPÄISCHE PATENTSCHRIFT

(11) **EP 0 801 458 B1**
(45) Veröffentlichungstag und Bekanntmachung des Hinweises auf die Patenterteilung: **14.08.2002**
(21) Anmeldenummer: 97105862.3
(22) Anmeldetag: 09.04.1997
(51) Int. Cl.: H02K 23/56

(54) **Elektromotor**
Electric motor
Moteur électrique

(30) Priorität: 10.04.1996 DE 19614217
(43) Veröffentlichungstag der Anmeldung: 15.10.1997
(73) Patentinhaber: INTERELECTRIC AG, CH-6072 Sachseln (CH)
(72) Erfinder: Neumann, Frank, 6020 Emmenbrücke (CH); Steffan, Joachim, 6074 Giswil (CH); Mayer, Jürgen, 6072 Sachseln (CH)
(74) Vertreter: Grünecker, Kinkeldey, Stockmair & Schwanhäusser Anwaltssozietät

(56) Entgegenhaltungen:
- US-A- 4 136 294
- US-A- 4 327 479
- PATENT ABSTRACTS OF JAPAN vol. 008, no. 181 (E-261), 21.August 1984 & JP 59 072972 A (MATSUSHITA DENKO KK), 25.April 1984,

## Beschreibung

Die vorliegende Erfindung betrifft Elektromotoren mit einem Stator mit einem innenliegenden Permanentmagneten und einer diesen unter Bildung eines Ringluftspaltes umgebenden, rohrförmigen Rückschlußhülse, die in ihrer axialen und radialen Lage durch eine Kunststoffumspritzung relativ zum Permanentmagneten gehalten und mit diesem verbunden ist.

Solche Motoren sind als Gleichstrommotoren mit einem Permanentmagneten und einem eisenlosen Rotor bekannt. Im Stand der Technik erfolgt die Verbindung der Rückschlußhülse mit dem Permanentmagneten dadurch, daß die Rückschlußhülse durch Drehen hergestellt und mit entsprechenden Ringnuten oder -stegen versehen wird, die von dem Kunststoff umspritzt werden können. Hierzu wird der noch nicht magnetisierte Permanentmagnetrohling und die Rückschlußhülse in einer Spritzgußform positioniert und anschließend die Verbindung durch die entsprechend gewünschte Spritzgußumspritzung hergestellt. Eine derartige Positionierung und Verankerung dieser beiden Bauteile zueinander hat sich im großen und ganzen bewährt. Jedoch ist man bestrebt, kostengünstigere Wege der Verbindungstechnik zu beschreiten.

Aus den Dokument US-A-4 327 479 ist ein solcher Rotor bekannt.

Es ist daher die Aufgabe der vorliegenden Erfindung, einen Gleichstromelektromotor der eingangs genannten Art bereitzustellen, der eine verfahrenstechnisch einfachere Positionierund Verankerungsmöglichkeit mit entsprechend ausreichender Stabilität bietet.

Diese Aufgabe wird erfindungsgemäß dadurch gelöst,daß die Kunststoffumspritzung bis etwa an den Außenumfang der Rückschlußhülse reicht und daß an einem Endbereich der Rückschlußhülse Aussparungen mit jeweils mindestens zwei in Richtung des Hülseninneren aufeinander zulaufende Kanten angeordnet sind, an denen die Kunststoffumspritzung an der Rückschlußhülse verankert ist. Diese Anordnung bietet den Vorteil, daß nunmehr an der Innenseite der Rückschlußhülse keine Einrichtungen zur Verankerung mehr vorgesehen sein müssen. Die Ausformung der Aussparung mit den entsprechend nach innen aufeinanderzulaufenden Kanten sorgt nunmehr für eine ausreichende Verankerung des Kunststoffes an der Rückschlußhülse. Hierbei kommt zugute, daß die Kunststoffmasse beim Abkühlen einer Schrumpfung unterliegt und somit eine Art Verkeilung in den Aussparungen stattfindet, die zu einer extrem formgenauen und stabilen Verankerungen führt.

Als besonders günstige Ausführungsvariante hat sich herausgestellt, wenn die Rückschlußhülse durch einen Stanz- und anschließenden Rollvorgang aus einem Blechmaterial mit einer Naht als Fügestelle hergestellt ist. Dieses hat zum einen den Vorteil, daß ein derartiges Verfahren sehr einfach durchzuführen und äußerst kostengünstig ist. Des weiteren müssen bei dem flachen Ausgangsblech lediglich Aussparungen mit geraden Kanten herausgestanzt werden, da die entsprechenden Kanten durch den Rollvorgang automatisch die gewünschte aufeinanderzulaufende Anordnung erhalten. Hierdurch können einfache Stanzwerkzeuge eingesetzt werden, ohne daß ein großer Aufwand zur Formgestaltung der Aussparungen betrieben werden muß. Die bislang praktizierte Herstellung der Rückschlußhülse als Drehteil erfordert einen erheblichen Materialaufwand sowie den Einsatz hochwertiger Präzisionsmaschinen. Die Ausführung gemäß dieser Variante erfordert lediglich einfache Stanz- und Rollmaschinen, ohne daß derartige Materialverluste wie beim Drehen anfallen.

Um die Verankerung der Kunststoffumspritzung nochmals zu verbessern, können die Aussparungen auch in Längsrichtung der Rückschlußhülse mindestens zwei aufeinanderzulaufende Kanten aufweisen. Auch hier macht sich der Schrumpfungsprozeß des Kunststoffes wieder positiv bemerkbar, indem eine Verkeilung auch in Längsrichtung der Hülse erfolgt.

In diesem Zusammenhang kann in besonders vorteilhafer Weise die Aussparung schwalbenschwanzförmig ausgebildet sein, wodurch die axiale und radiale Verkeilung der Kunststoffumspritzung mit einer Aussparungsform optimal erreicht ist.

Als besonders stabile Variante hat sich auch herausgestellt, wenn die Naht in Längsrichtung der Rückschlußhülse verläuft und durch nach Art eines Puzzles ineinandergreifende Seitenkanten des Blechmaterials gebildet ist. Diese Art der Verbindung ist sehr stabil und erfordert keine Wärmebehandlung in Form von Schweißen oder Löten, die zu Gefügeänderungen der Rückschlußhülse führen könnten. Darüber hinaus kann eine derartige Naht sehr leicht Wärmedehnungen auffangen, die im Betrieb auftreten.

Damit eine günstige Positionierung der Rückschlußhülse in der Spritzgußform relativ zum Permanentmagneten erfolgt, kann die Rückschlußhülse eine Codieraussparung zum Ausrichten des zur Längsnaht gehörigen Rückschlußhülsendurchmessers im wesentlichen in die magnetische Vorzugsachse des Permanentmagneten des Stators aufweisen. Hierdurch nimmt die Längsnaht möglichst wenig Einfluß auf das Magnetfeld des Permanentmagneten, da sie über einem Pol bzw. an einer Stelle angeordnet ist, an der sich der magnetische Fluß in der Rückschlußhülse symmetrisch teilt.

Eine weitere vorteilhafte Ausführungsform sieht vor, daß die Umspritzung am Endbereich der Rückschlußhülse in Form einer Scheibe ausgebildet ist, die in Fluchtung mit den Aussparungen von außen zugängliche Rasthinterschneidungen zum Einrasten von Rastelementen zusätzlicher Bauteile aufweist, wobei im wesentliche radiale Zugriffsöffnungen im Bereich der Aussparung einen Zugriff auf die Rasthinterschneidung zum Lösen von einrastbaren Bauteilen gewähren. Eine derartige lösbare Anordnung weiterer Bauteile hat den entscheidenden Vorteil, daß in Modulbauweise an einem einzigen Grundkörper die verschiedenen Bauteilanbauten erfolgen können. Es kann z.B. ohne weiteres ein Bürstendeckel oder ein Encoder oder Positionsmelder usw. angebracht werden. Dies kann entsprechend bei der Fertigungsmontage oder im späteren Austausch gemäß Kundenwunsch erfolgen.

Günstigerweise kann die Scheibe noch eine Zentriereinrichtung für anzubringende Bauteile aufweisen, wodurch ein Spiel in den Rasteinrichtungen ausgeglichen und ein lagerichtiges Positionieren der anzubringenden Bauteile erfolgt.

Insbesondere bei der Herstellung der Rückschlußhülse durch einen Rollformvorgang sind Grenzen bezüglich der verwendbaren Werkstoffdicken gesetzt. Gemäß einer Ausführungsform wird das Eisenvolumen durch eine in die Rückschlußhülse zum Erhöhen der Rückschlußwirkung im wesentlichen paßgenau eingesetzte Zusatzhülse vergrößert. Die Hülse wird üblicherweise eingepreßt und kann darüber hinaus einen Längsschlitz aufweisen, dessen zugehöriger Zusatzhülsendurchmesser im wesentlichen mit dem Rückschlußhülsendurchmesser D_{H} zusammenfällt.

Im folgenden wird eine Ausführungsform der vorliegenden Erfindung anhand einer Zeichnung näher erläutert. Es zeigen:
- Fig.1: eine Schnittdarstellung durch einen Stator eines Gleichstromelektromotors gemäß der vorliegenden Erfindung,
- Fig. 2: eine Seitenansicht des Stators aus Figur 1,
- Fig. 3: die Rückschlußhülse aus Figur 1 in perspektivischer Darstellung,
- Fig. 4: eine schematisierte Draufsicht auf die Rückschlußhülse aus Figur 3,
- Fig. 5: eine Seitenansicht eines Ausschnittes des Endbereiches mit den Aussparungen der Hülse aus Figur 4,
- Fig. 6: ein vergrößerter Halbschnitt des Stators mit Rotorwelle und angefügtem Bauteil und

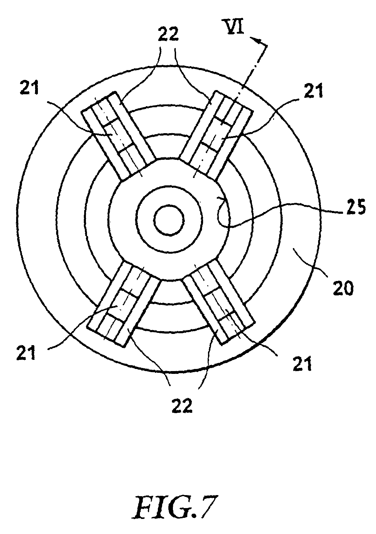

- Fig. 7: eine verkleinerte Seitenansicht von rechts des angefügten Bauteils aus Figur 6.

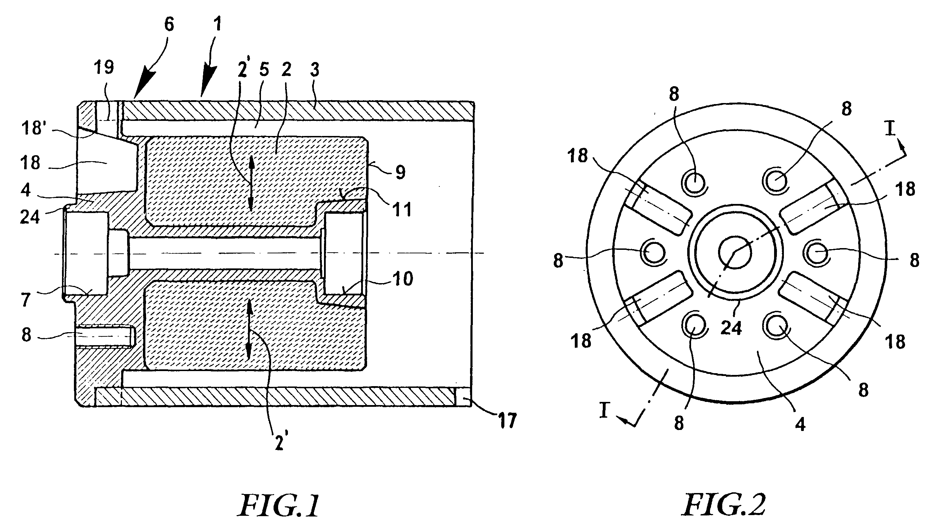

Der in Figur 1 dargestellte Stator 1 besteht im wesentlichen aus einem ringförmigen Permanentmagneten 2 mit einer magnetischen Vorzugsachse 2', einer diesen umgebenden rohrförmigen Rückschlußhülse 3 und einer diese beiden zueinander positionierenden und miteinander verbindenden Kunststoffumspritzung 4.

Zwischen dem Permanentmagneten 2 und der Rückschlußhülse 3 ist ein Luftspalt 5 gebildet, in dem eine nicht dargestellte eisenlose Läuferwicklung positioniert wird.

Die Kunststoffumspritzung 4 weist an dem einen Endbereich 6 der Rückschlußhülse 3 die Form einer Scheibe auf, in der ein Lager-7 sitz 7 und mehrere Gewindebohrungen 8 sowie noch weiter unten näher beschriebene Einrichtungen angeordnet sind. Die Kunststoffumspritzung 4 erstreckt sich weiter in die Bohrung des Permanentmagneten 2 hinein und formt am gegenüberliegenden Ende 9 des Permanentmagneten einen weiteren Lagersitz 10 innerhalb einer Bohrungserweiterung 11 im Permanentmagneten 2. Durch diese Form wir durch die Kunststoffumspritzung 4 ein sicherer Halt des Permanentmagnetes 2 relativ zur Rückschlußhülse 3 gewährleistet.

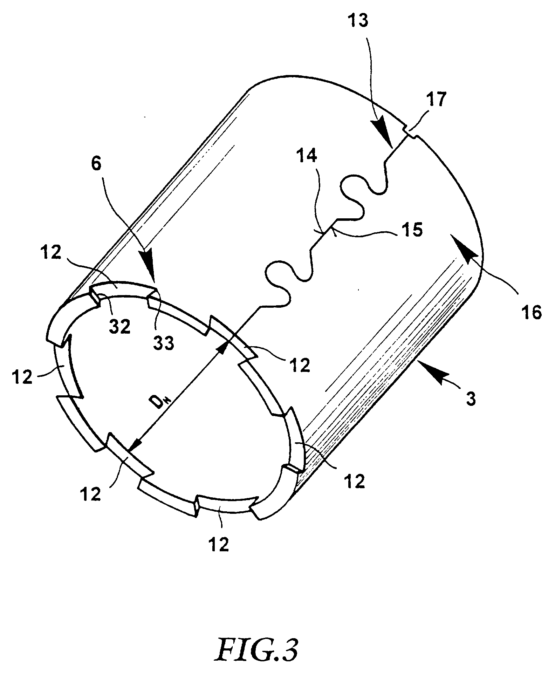

Wie insbesondere unter zur Hilfenahme der Figur 3 zu erkennen ist, erfolgt die Verankerung der Kunststoffumspritzung 4 an der Rückschlußhülse 3 über mehrere am Endbereich 6 angeordnete, schwalbenschwanzförmige Aussparungen 12. Dabei bildet die kurze Seite der schwalbenschwanzförmigen Aussparung 12 die Öffnung nach außen, so daß die Kunststoffumspritzung 4 in Längsrichtung der Hülse 3 verankert ist. Des weiteren weist die Rückschlußhülse 3 eine Längsnaht 13 mit einem zugehörigen Hülsendurchmesser D_{H} derart auf, daß die beiden diese bildenden Stirnseiten 14, 15 nach Art eines Puzzles ineinandergreifen. Hierdurch wird sowohl eine axiale als auch eine tangentiale Verschiebung der Stirnseiten 14, 15 verhindert. An dem den Aussparungen 12 gegenüberliegenden Endbereich 16 der Rückschlußhülse 3 befindet sich eine Codieraussparung 17, die zur genauen Positionierung der Hülse 3 relativ zum Permanentmagneten 2 innerhalb einer Spritzgußform dient.

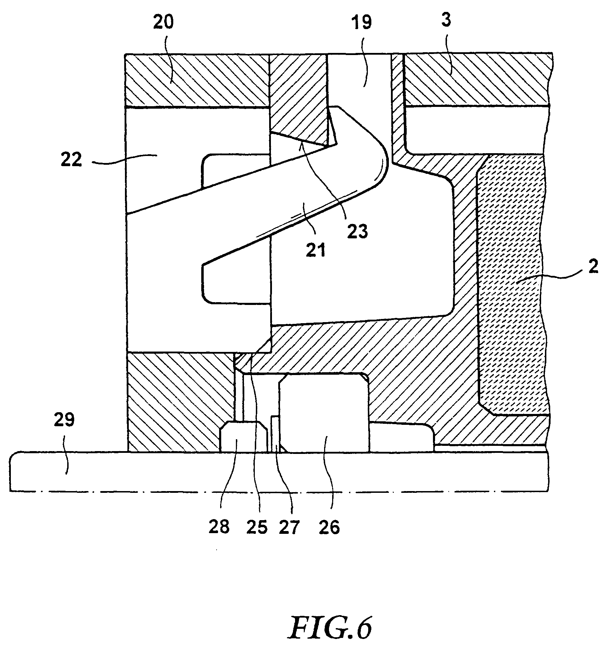

In der Scheibe der Kunststoffumspritzung 4 sind darüber hinaus vier von außen zugängliche, taschenförmige Rastöffnungen 18 angeordnet, die zur Bildung einer Rasthinterschneidung 18' mit radial sich in die Aussparung 12 erstreckenden Zugriffsöffnungen 19 in Verbindung stehen. Insbesondere in Figur 6 ist zu erkennen, wie ein zusätzliches Bauteil 20, z.B. ein Bürstendeckel oder ein Encoder oder ein Positionsgeber usw., mittels geeigneter Rasteinrichtungen 21 in den Rastöffnungen 18 befestigt werden kann. Die hakenförmigen Rastelemente 21 sind in Aussparungen 22 des Bauteils 20 federnd angeordnet, so daß sie beim Aufstecken auf die Kunststoffumspritzung 4 von der Schräge 23 nach unten gedrückt werden, bis sie in die Zugriffsöffnung 19 hinter die Rasthinterschneidung 18' einrasten können.

Des weiteren ist an der Kunststoffumspritzung 4 ein Zentrieransatz 24 zum Zentrieren der anzubringenden Bauteile 20 vorgesehen, der in entsprechende Zentrieraufnahmen 25 an den Bauteilen 20 eingreift.

In der Figur 6 sind ferner schematisch ein innerhalb der Lageraufnahme 7 angeordnetes Lager 26, ein Sicherungsring 27 und eine Dichtung 28, sowie eine durch sämtliche Bauteile hindurchgeführte Motorwelle 29 dargestellt.

Im folgenden wird die Wirkungs- und Funktionsweise des oben beschriebenen Ausführungsbeispieles näher erläutert.

Die Rückschlußhülse 3 wird bei dem hier gezeigten Ausführungsbeispiel aus einem Blechmaterial durch einen Stanz- und Rollvorgang hergestellt. Hierzu wird das flache Blech entsprechend gestanzt, so daß die Aussparungen 12 sowie die entsprechenden Stirnseiten 14, 15 und die Codieraussparung 17 ausgeformt sind.

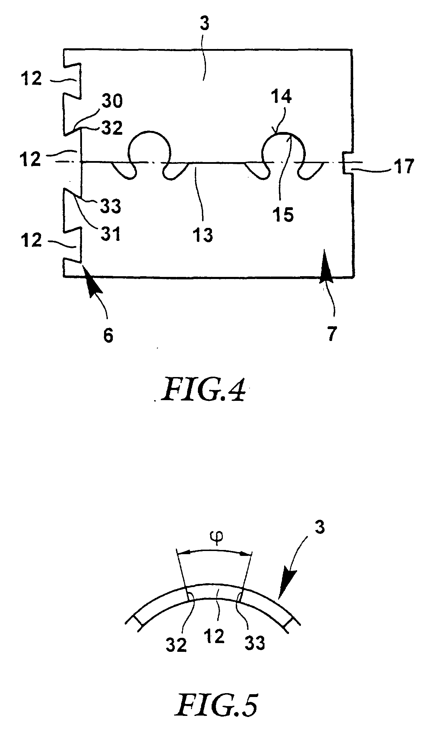

Durch die Schwalbenschwanzform weisen die Aussparungen 12 jeweils eine Kante 30 und 31 auf, die in Längsrichtung aufeinanderzulaufen. Die Kanten 32 und 33 der Aussparungen 12 verlaufen bei dem noch nicht rollgeformten Blechmaterial parallel zueinander. Durch den Rollvorgang in die Rohrform, unter Zusammenfügen der Stirnseiten 14, 15 zur Bildung der Längsnaht 13, entstehen durch den Walzvorgang unterschiedliche Längenänderungen des Materials in radialer Richtung, so daß die vorher parallelen Kanten 32, 33 nunmehr zum Inneren der Rückschlußhülse 3 hin ebenfalls aufeinander zulaufen. Dies ist insbesondere anhand der Figur 5 verdeutlicht. Die Kanten 32, 33 bilden somit einen Winkel ϕ, der im wesentlichen von dem Rollradius der Rückschlußhülse 3 abhängt, so daß für das innerhalb der Aussparungen 12 angeordnete Material der Kunststoffumspritzung 4 auch in radialer Richtung eine Hinterschneidung gebildet ist.

Nach dem Rollvorgang werden die Rückschlußhülse 3 und der noch nicht magnetisierte Permanentmagnetrohling 2 in eine Spritzgußform eingebracht und insbesondere mittels der Codieraussparung 17 zueinander positioniert, so daß die Längsnaht 13 über einen späteren magnetischen Pol des Permanentmagneten 2 angeordnet ist. In der Spritzgußform wird nunmehr der Kunststoff zur Bildung der Kunststoffumspritzung 4 eingespritzt und aushärten gelassen. Durch die Schrumpfung der warmen Kunststoffmasse werden die Materialanteile, die in den Aussparungen 12 angeordnet sind fest in diesen verkeilt, da die Kanten 30, 31, 32 und 33 jeweils entgegen der Schrumpfungsrichtung geneigt sind. Auch der Permanentmagnet 2 wird durch die entsprechende Formgebung der Kunststoffumspritzung 4 durch den Schrumpfungsprozeß gegenüber dieser verspannt.

Anschließend erfolgt die Magnetisierung des Permanentmagneten 2, wobei die Codieraussparung 17 zur entsprechenden Ausrichtung des Stators 1 dient.

Es sei nochmals angemerkt, daß die Ausgestaltung der Kunststoffumspritzung 4 darüber hinaus noch die platzsparende Möglichkeit bietet zusätzliche Bauteile 20 mit Hilfe des Zentrieransatzes 24 und der Zentrieraufnahme 25 positionsgenau am Stator lösbar anzuordnen. Soll z.B. ein einmal an dem Stator 1 befestigtes Bauteil 20 wieder entfernt werden, so wird ein geeignetes Werkzeug in die Zugriffsöffnung 19 eingeführt, bis die Rastelemente 21 außer Eingriff mit den Rasthinterschneidungen 18' sind. Anschließend kann das Bauteil 20 abgezogen und gegebenenfalls durch ein neues ersetzt werden. Hier besteht demnach die Möglichkeit, derartige Anbauten unmittelbar an die Rückschlußhülse 3 anzuordnen. Darüber hinaus können auch die Gewindebohrungen 8 zur Befestigung zusätzlicher Bauteile dienen.

In der obigen Beschreibung enthaltene Angaben zu einer der offenbarten Ausführungsformen gelten, soweit sinnvoll und in sinnvoller Übertragung, jeweils auch für andere Ausführungsformen.

## Patentansprüche

1. Elektromotor mit einem Stator (1) mit einem innenliegenden Permanentmagneten (2) und einer diesen unter Bildung eines Ringluftspalts (5) umgebenden, rohrförmigen Rückschlußhülse (3), die in ihrer axialen und radialen Lage durch eine Kunststoffumspritzung (4) relativ zum Permanentmagneten (2) gehalten und mit diesem verbunden ist,
**dadurch gekennzeichnet,**
**daß** die Kunststoffumspritzung bis etwa an den Außenumfang der Rückschlußhülse reicht und daß an einem Endbereich (6) der Rückschlußhülse (3) Aussparungen (12) mit jeweils mindestens zwei in Richtung des Hülseninneren aufeinanderzulaufenden Kanten (32, 33) angeordnet sind, an denen die Kunststoffumspritzung (4) an der Rückschlußhülse (3) verankert ist.

2. Elektromotor nach Anspruch 1,
**dadurch gekennzeichnet,**
**daß** die Rückschlußhülse (3) durch einen Stanz- und anschließenden Rollvorgang aus einem Blechmaterial mit einer Naht (13) als Fügestelle hergestellt ist.

3. Elektromotor nach Anspruch 1 oder 2,
**dadurch gekennzeichnet,**
**daß** die Aussparung (12) auch in Längsrichtung der Rückschlußhülse (3) mindestens zwei aufeinanderzulaufende Kanten (30, 31) aufweisen.

4. Elektromotor nach Anspruch 3,
**dadurch gekennzeichnet,**
**daß** die Aussparung (12) schwalbenschwanzförmig ausgebildet sind.

5. Elektromotor nach einem der Ansprüche 2 bis 4,
**dadurch gekennzeichnet,**
**daß** die Naht (13) in Längsrichtung der Rückschlußhülse (3) verläuft und durch nach Art eines Puzzles ineinandergreifende Seitenkanten (14, 15) des Blechmaterials gebildet ist.

6. Elektromotor nach einem der Ansprüche 2 bis 5,
**dadurch gekennzeichnet,**
**daß** die Rückschlußhülse (3) eine Codieraussparung (17) zum Ausrichten des zur Längsnaht (13) gehörigen Rückschlußhülsendurchmessers (D_{H}) im wesentlichen in die magnetische Verzugsachse (2') des Permanentmagneten (2) des Stators (1) aufweist.

7. Elektromotor nach einem der Ansprüche 1 bis 6,
**dadurch gekennzeichnet,**
**daß** die Kunststoffumspritzung am Endbereich der Rückschlußhülse (3) in Form einer Scheibe ausgebildet ist, die in Fluchtung mit den Aussparungen (12) nach außen zugängliche Rasthinterschneidungen (18') zum lösbaren Einrasten von Rastelementen (21) zusätzlicher Bauteile (20) aufweist, wobei die im wesentlichen radiale Zugriffsöffnung (19) im Bereich der Aussparung (12) einen Zugriff auf die Rasthinterschneidung (18') zum Lösen von einrastbaren Bauteilen (20) gewähren.

8. Elektromotor nach Anspruch 7,
**dadurch gekennzeichnet,**
**daß** die Scheibe eine Zentriereinrichtung (24) für anzubringende Bauteile (20) aufweist.

9. Elektromotor nach einem der Ansprüche 1 bis 8,
**dadurch gekennzeichnet,**
**daß** in die Rückschlußhülse (3) zum Erhöhen der Rückschlußwirkung eine Zusatzhülse im wesentlichen paßgenau eingesetzt ist.

10. Elektromotor nach Anspruch 9,
**dadurch gekennzeichnet,**
**daß** die Zusatzhülse einen Längsschlitz aufweist, dessen zugehöriger Zusatzhülsendurchmesser im wesentlichen mit dem Rückschlußhülsendurchmesser (D_{H}) zusammenfällt.

## Claims

1. An electric motor comprising a stator (1) with an internal permanent magnet (2) and a tubular magnetic return sleeve (3) surrounding said permanent magnet (2) whereby an annular air gap (5) is formed therebetween, said magnetic return sleeve (3) being held at its axial and radial positions relative to said permanent magnet (2) by a frame (4) of plastic material injected around these two components and being connected to said permanent magnet (2) by said plastic frame (4),
**characterized in**
**that** said plastic frame (4) extends approximately up to the outer circumference of said magnetic return sleeve, and that one end portion (6) of said magnetic return sleeve (3) has provided therein recesses (12) having each at least two edges (32, 33) which extend towards each other in the direction of the interior of the sleeve (3), the plastic frame (4) being anchored on said magnetic return sleeve (3) by means of said recesses (12).

2. An electric motor according to claim 1,
**characterized in**
**that** the magnetic return sleeve (3) is produced from a sheet-metal material by means of a punching operation which is followed by a rolling operation, said magnetic return sleeve (3) being joined along a seam (13).

3. An electric motor according to claim 1 or 2,
**characterized in**
**that** the recesses (12) have also in the longitudinal direction of the magnetic return sleeve (3) at least two edges (30, 31) which extend towards each other.

4. An electric motor according to claim 3,
**characterized in**
**that** the recess (12) has the shape of a dovetail.

5. An electric motor according to one of the claims 2 to 4,
**characterized in**
**that** the seam (13) extends in the longitudinal direction of the magnetic return sleeve (3) and is defined by lateral edges (14, 15) of the sheet material which interengage like a puzzle.

6. An electric motor according to one of the claims 2 to 5,
**characterized in**
**that** the magnetic return sleeve (3) is provided with a coding recess (17) for aligning the magnetic return sleeve diameter (D_{H}), which belongs to the longitudinal seam (13), essentially along the easy axis of magnetization (2') of the permanent magnet (2) of the stator (1).

7. An electric motor according to one of the claims 1 to 6,
**characterized in**
**that**, at the end portion of the magnetic return sleeve (3), the plastic frame is implemented in the shape of a disk having, in alignment with the recesses (12), undercut locking portions (18') which are accessible from outside and which are used for releasably engaging locking elements (21) of additional components (20), the essentially radial access opening (19) in the area of the recess (12) permitting access to said undercut locking portion (18') so that the components (20), which are adapted to be be locked in position, can be released.

8. An electric motor according to claim 7,
**characterized in**
**that** the disk is provided with centering means (24) for components (20) to be attached.

9. An electric motor according to one of the claims 1 to 8,
**characterized in**
**that**, for increasing the magnetic return effect, the magnetic return sleeve (3) has inserted therein an additional sleeve in an essentially tight-fitting manner.

10. An electric motor according to claim 9,
**characterized in**
**that** the additional sleeve is provided with a longitudinal slot whose associated additional sleeve diameter essentially coincides with the magnetic return sleeve diameter (D_{H}).

## Revendications

1. Moteur électrique avec un stator (1) comprenant un aimant permanent (2), à l'intérieur, et un manchon de court-circuit tubulaire (3) qui entoure celui-ci en formant un entrefer annulaire (5) et qui est maintenu dans sa position axiale et radiale par rapport à l'aimant permanent (2) et est relié à celui-ci grâce à l'injection d'une pièce en matière plastique injectée (4),
**caractérisé en ce que** la pièce en matière plastique injectée va à peu près jusqu'à la circonférence extérieure du manchon et **en ce qu'**il est prévu, dans une zone d'extrémité (6) du manchon (3), des évidements (12) qui présentent au moins deux bords (32, 33) s'étendant l'un vers l'autre, en direction de l'intérieur du manchon, et au niveau desquels la pièce en matière plastique injectée (4) est ancrée au manchon (3).

2. Moteur électrique selon la revendication 1, **caractérisé en ce que** le manchon de court-circuit (3) est fabriqué grâce à une opération de découpage suivie d'une opération de roulage, à partir d'un matériau en tôle, avec un joint (13) comme assemblage.

3. Moteur électrique selon la revendication 1 ou 2, **caractérisé en ce que** les évidements (12) présentent aussi dans le sens longitudinal du manchon de court-circuit (3) au moins deux bords (30, 31) s'étendant l'un vers l'autre.

4. Moteur électrique selon la revendication 3, **caractérisé en ce que** les évidements (12) sont en forme de queue d'aronde.

5. Moteur électrique selon l'une des revendications 2 à 4, **caractérisé en ce que** le joint (13) s'étend dans le sens longitudinal du manchon de court-circuit (3) et est défini par des bords latéraux (14, 15) du matériau en tôle qui s'emboîtent à la manière d'un puzzle.

6. Moteur électrique selon l'une des revendications 2 à 5, **caractérisé en ce que** le manchon de court-circuit (3) comporte un évidement de codage (17) pour l'alignement du diamètre de manchon (D_{H}) correspondant au joint longitudinal (13) sensiblement dans l'axe magnétique préférentiel (2') de l'aimant permanent (2) du stator (1).

7. Moteur électrique selon l'une des revendications 1 à 6, **caractérisé en ce que** la pièce en matière plastique injectée, dans la zone d'extrémité du manchon de court-circuit (3), a la forme d'un disque qui présente, dans l'alignement des évidements (12), des contre-dépouilles d'encliquetage (18') qui sont accessibles de l'extérieur et qui sont destinées à l'encliquetage amovible d'éléments d'encliquetage (21) de pièces supplémentaires (20), l'ouverture d'accès sensiblement radiale (19) prévue dans la zone de l'évidement (12) garantissant un accès à ladite contre-dépouille d'encliquetage (18') pour débloquer des pièces encliquetables (20).

8. Moteur électrique selon la revendication 7, **caractérisé en ce que** le disque présente un dispositif de centrage (24) pour des pièces à ajouter (20).

9. Moteur électrique selon l'une des revendications 1 à 8, **caractérisé en ce qu'**un manchon supplémentaire est introduit de manière sensiblement ajustée dans le manchon de court-circuit (3) pour augmenter l'action de court-circuit.

10. Moteur électrique selon la revendication 9, **caractérisé en ce que** le manchon supplémentaire présente une fente longitudinale dont le diamètre de manchon supplémentaire correspondant coïncide sensiblement avec le diamètre de manchon de court-circuit (D_{H}).
